(19) Europäisches Patentamt
European Patent Office
Office européen des brevets

(11) **EP 0 777 852 B1**

## (12) FASCICULE DE BREVET EUROPEEN

(45) Date de publication et mention
de la délivrance du brevet:
**23.09.1998 Bulletin 1998/39**

(21) Numéro de dépôt: **95927756.7**

(22) Date de dépôt: **04.08.1995**

(51) Int Cl.⁶: **G01F 1/66**

(86) Numéro de dépôt international:
**PCT/FR95/01051**

(87) Numéro de publication internationale:
**WO 96/06333 (29.02.1996 Gazette 1996/10)**

(54) **DISPOSITIF DE MESURE ULTRASONORE D'UNE QUANTITE VOLUMIQUE D'UN FLUIDE A PROPRIETES ACOUSTIQUES AMELIOREES**

ULTRASCHALLDURCHFLUSSMESSER ZUR MESSUNG EINER FLÜSSIGKEITSVOLUMENMENGE MIT VERBESSERTEN AKUSTISCHEN EIGENSCHAFTEN

ULTRASONIC DEVICE WITH ENHANCED ACOUSTIC PROPERTIES FOR MEASURING A VOLUME AMOUNT OF FLUID

(84) Etats contractants désignés:
**AT BE CH DE DK ES FR GB IT LI NL SE**

(30) Priorité: **23.08.1994 FR 9410199**

(43) Date de publication de la demande:
**11.06.1997 Bulletin 1997/24**

(73) Titulaire: **SCHLUMBERGER INDUSTRIES S.A. 92120 Montrouge (FR)**

(72) Inventeurs:
• **HUANG, Bao, Tuan**
  **F-92160 Antony (FR)**
• **MARQUETTE, Gabriel**
  **F-78640 Villiers-Saint-Frédéric (FR)**

(56) Documents cités:
**EP-A- 0 347 096          EP-A- 0 538 930**
**WO-A-94/09342          WO-A-94/21989**
**FR-A- 2 369 566**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention est relative à un dispositif de mesure ultrasonore d'une quantité volumique d'un fluide qui permet de limiter le nombre de modes acoustiques propagatifs et d'améliorer la linéarité de la courbe de calibration dudit dispositif.

Il est largement connu d'utiliser des transducteurs ultrasonores pour mesurer une quantité volumique d'un fluide s'écoulant dans une conduite.

Classiquement, les transducteurs ultrasonores sont éloignés l'un de l'autre dans l'écoulement de fluide, définissant entre eux un trajet de mesure ultrasonore, et sont disposés par exemple face à face et alignés suivant la direction longitudinale de l'écoulement ou bien ils sont montés dans l'une des parois de la conduite.

Alternativement, les transducteurs émettent et reçoivent des signaux ultrasonores qui se propagent dans l'écoulement de fluide et des moyens électroniques sont prévus pour déterminer la quantité volumique de fluide qui s'écoule dans la conduite à partir de mesures d'au moins une grandeur physique caractéristique de la vitesse de propagation des signaux ultrasonores dans l'écoulement du fluide.

Une telle grandeur physique est par exemple le temps de propagation des signaux ultrasonores ou la phase de ces signaux.

On sait également que les dispositifs mettant en oeuvre ce type de mesure sont sujets à des erreurs de mesure qui se traduisent par un manque de précision dans la mesure et par la non linéarité de la courbe de calibration de ces dispositifs.

Ces erreurs sont en grande partie imputables à la propagation des ondes ultrasonores dans l'écoulement de fluide suivant de nombreux modes acoustiques autres que le mode plan et qui induisent des déphasages parasites.

La demande internationale WO93/00570 propose une méthode pour réduire ces erreurs et qui est basée sur une technique de transmission de paquets d'ondes selon laquelle tous les quatre paquets d'ondes sont inversés par rapport aux paquets précédents afin d'annuler les effets de la propagation des modes supérieurs dans la conduite.

Bien que cette méthode soit efficace, elle comporte néanmoins l'inconvénient d'être compliquée à gérer du point de vue du traitement du signal et de l'électronique associée et requiert une consommation d'énergie non négligeable.

La demande internationale WO94/09342 décrit un dispositif de mesure ultrasonore dans lequel les deux transducteurs ultrasonores sont éloignés l'un de l'autre suivant la direction d'écoulement du fluide depuis l'entrée jusqu'à la sortie du dispositif et qui comprend des moyens pour mesurer le temps de propagation de signaux ultrasonores entre les deux transducteurs. Ce dispositif définit une pluralité de passages pour l'écoulement du fluide, parallèles entre eux, chaque passage étant dimensionné pour avoir une fréquence de coupure caractéristique de la propagation de l'onde suivant le mode plan qui est supérieure à la fréquence de transmission des ultrasons et ainsi ne permettre que la propagation des ondes suivant le mode plan dans ledit passage.

Un tel dispositif ne consomme pas d'énergie supplémentaire mais introduit encore des déphasages parasites de par la présence de la pluralité de passages et ces déphasages parasites affectent la linéarité de la courbe de calibration.

La présente invention vise à remédier aux inconvénients de l'art antérieur en proposant un dispositif de mesure ultrasonore d'une quantité volumique d'un fluide qui soit simple, ne nécessite pas de traitement de signal supplémentaire en dehors de celui affecté à la mesure ultrasonore et qui n'introduit pas de déphasage parasite susceptible d'entraîner des erreurs de mesure inacceptables pour les applications envisagées telles que le comptage de gaz.

La présente invention a ainsi pour objet un dispositif de mesure ultrasonore d'une quantité volumique d'un fluide s'écoulant d'une première zone vers une seconde zone dudit dispositif, comprenant au moins deux transducteurs ultrasonores aptes à émettre et à recevoir des signaux ultrasonores, disposés chacun dans l'une desdites zones du dispositif et définissant entre eux un trajet de mesure ultrasonore dans le fluide, ainsi que des moyens pour déterminer la quantité volumique dudit fluide à partir de mesures d'au moins une grandeur physique caractéristique de la vitesse de propagation des signaux ultrasonores dans le fluide, caractérisé en ce que ledit dispositif de mesure ultrasonore comporte, d'une part, sur au moins une partie du trajet de mesure ultrasonore deux conduits concentriques d'axe longitudinal, l'un extérieur et l'autre intérieur définissant entre leurs surfaces respectives intérieure et extérieure un espace longitudinal et, d'autre part, des moyens permettant la mesure ultrasonore uniquement dans l'espace longitudinal.

Cette caractéristique permet de limiter de manière simple le nombre de modes propagatifs et de réduire considérablement les déphasages parasites.

Avantageusement, le conduit intérieur est obstrué dans sa partie centrale par un élément central séparant l'intérieur dudit conduit intérieur en deux logements internes ce qui force le fluide à emprunter l'espace longitudinal pour passer de la première zone vers la seconde zone.

Ainsi, lors de l'émission des signaux ultrasonores par l'un des transducteurs ultrasonores, la majeure partie de ces signaux va se propager dans l'espace longitudinal si l'on choisit de manière appropriée les transducteurs, tandis qu'une faible partie desdits signaux émis dits signaux parasites se propagera dans le logement interne situé du côté où se trouve l'émetteur. Cette faible partie des signaux ultrasonores se propageant dans le logement interne va rencontrer l'élément central, se réfléchir sur celui-ci et se propager dans ledit logement interne en direction de l'émetteur.

Lorsque cette faible partie des signaux ultrasonores atteint l'émetteur, la majeure partie des signaux ultrasonores ayant emprunté l'espace longitudinal a été reçue par l'autre transducteur et alors il importe peu que l'émetteur reçoive des signaux réfléchis.

Il est possible de prévoir que l'élément central présente en regard de chaque logement interne une surface concave ou convexe afin d'obliger les signaux ultrasonores qui se propagent dans le logement interne à se réfléchir sur les parois internes dudit logement interne, ce qui augmente leur temps de parcours et donc retarde l'arrivée sur l'émetteur de signaux parasites réfléchis.

Ceci permet de prolonger l'émission et/ou la réception des signaux ultrasonores sans que les signaux émis soient perturbés.

Il est également possible d'atténuer la propagation des signaux ultrasonores dans le logement interne du conduit intérieur en prévoyant un revêtement réalisé dans un matériau absorbant les ultrasons sur au moins une partie de la dimension longitudinale dudit logement interne.

Ainsi, les signaux ultrasonores qui se propagent dans le logement interne vont se trouver en quelque sorte piégés dans ce logement si bien que l'émission de signaux ultrasonores par le transducteur émetteur peut être prolongée sans crainte d'être perturbée par des signaux parasites réfléchis.

Selon une caractéristique avantageuse de l'invention, l'élément central séparant l'intérieur du conduit intérieur en deux logements internes est par exemple une cloison solidaire du conduit intérieur.

A partir d'une seule pièce, on peut donc fabriquer simplement et simultanément le conduit intérieur avec ses deux logements internes et l'élément central.

En outre, étant donné que la distance entre chaque transducteur ultrasonore et la cloison solidaire du conduit intérieur est connue, il est possible d'effectuer une mesure de la célérité du son entre deux mesures ultrasonores à l'aide d'un seul transducteur afin de tenir compte des variations des propriétés du fluide et ainsi de corriger les mesures ultrasonores ultérieures.

Pour ce faire, les transducteurs ultrasonores doivent être fortement amortis afin de pouvoir commuter l'émetteur en récepteur avant l'arrivée du premier écho.

Selon une autre caractéristique avantageuse de l'invention, l'élément central est par exemple un élément de remplissage réalisé dans un matériau absorbant les ultrasons.

Ainsi, on peut directement atténuer la réflexion des signaux ultrasonores dans les logements internes du conduit intérieur sans qu'il soit nécessaire de munir la surface intérieure de chaque logement d'un revêtement réalisé dans un matériau absorbant les ultrasons.

L'élément de remplissage peut également posséder une surface de forme concave ou convexe en regard de chaque logement interne afin d'obtenir les signaux parasites à se réfléchir sur les parois dudit logement interne et donc d'augmenter le temps de propagation des signaux ultrasonores tout en les atténuant.

En outre, lorsque le conduit intérieur présente une dimension longitudinale supérieure à celle du conduit extérieur et est disposé symétriquement par rapport au conduit extérieur, l'écoulement du fluide au sortir de l'espace longitudinal donne lieu à une recirculation dudit écoulement moins intense et donc à une perturbation plus faible ce qui améliore très nettement la qualité des mesures sur toute la gamme de débits.

Préférentiellement, les transducteurs ultrasonores sont alignés suivant la direction longitudinale de l'axe longitudinal XX' de manière à faire face aux extrémités des conduits concentriques.

On peut aussi envisager de disposer les transducteurs sur une même paroi du dispositif en les inclinant l'un vers l'autre de manière à former un trajet ultrasonore en forme de V et de disposer les conduits parallèlement à ladite paroi sur le trajet en forme de V.

Selon une caractéristique de l'invention, lorsque les transducteurs sont alignés suivant la direction longitudinale de l'axe XX', la distance e entre chaque transducteur et l'extrémité longitudinale correspondante du conduit intérieur est comprise entre 0,11 et 0,91 où l est la distance entre chaque transducteur et l'extrémité longitudinale correspondante du conduit extérieur, et la distance l est comprise entre 0,3D et 3D, D étant le diamètre intérieur du conduit extérieur.

Selon une autre caractéristique de l'invention, l'espace longitudinal possède une section de passage transversale dont la plus grande dimension radiale confère à ladite section de passage une fréquence de coupure caractéristique du mode de propagation (0,2) qui est supérieure à la fréquence des signaux ultrasonores émis par les transducteurs.

La Demanderesse s'est aperçue de manière tout à fait inattendue que cette dernière caractéristique permet d'obtenir des mesures très précises, une courbe de calibration dont la linéarité est améliorée et qui varie peu en fonction des propriétés du fluide (par exemple pour différents types de gaz).

Selon une autre caractéristique de l'invention, il peut être également intéressant que la section de passage transversale de l'espace longitudinal ait une plus grande dimension radiale conférant à ladite section une fréquence de coupure caractéristique du mode de propagation (0,1) qui est supérieure à la fréquence des signaux ultrasonores émis par les transducteurs, ne permettant ainsi qu'au mode plan de se propager dans l'espace longitudinal.

De manière avantageuse, si le conduit intérieur n'est pas obstrué, on peut envisager d'utiliser des transducteurs ultrasonores dont la partie sensible a une forme adaptée à la section de passage transversale de l'espace longitudinal. Par exemple, des transducteurs de type piézoélectrique en polymère (PVDF) conviennent parfaitement ou des transducteurs du type de ceux décrits dans la demande de brevet français n° 9407488.

Ainsi, en alignant ces transducteurs ultrasonores suivant la direction longitudinale de l'axe longitudinal et en les plaçant suffisamment près des extrémités du conduit intérieur, par exemple à une distance e égale à 0,11, il est possible de ne transmettre la majeure partie de l'énergie ultrasonore que dans l'espace longitudinal là où s'effectuent les mesures, grâce à la disposition des parties sensibles des transducteurs en vis à vis dudit espace longitudinal et l'on s'affranchit ainsi de signaux parasites réfléchis dans le conduit intérieur et renvoyés vers les transducteurs ultrasonores.

Par conséquent, dans cette configuration, le fluide emprunte également le passage longitudinal situé à l'intérieur du conduit intérieur pour passer de la première zone vers la seconde zone, ce qui autorise une perte de charge plus élevée qu'en présence du conduit intérieur obstrué.

Il est également tout à fait possible de réduire la distance e entre les transducteurs et les extrémités du conduit intérieur afin que le fluide ne s'écoule que dans l'espace longitudinal.

Selon les applications envisagées, on peut dimensionner la section de passage transversale de l'espace longitudinal de manière à lui conférer une fréquence de coupure caractéristique du mode de propagation (0,2) ou (0,1) qui est supérieure à la fréquence des signaux ultrasonores émis par les transducteurs.

Selon un premier mode de réalisation de l'invention, les conduits concentriques sont des tubes conférant ainsi à l'espace longitudinal une section de passage transversale de forme annulaire.

Selon une variante de réalisation des conduits concentriques, le conduit extérieur est un tube et le conduit intérieur a une section transversale de forme elliptique.

Selon une autre variante de réalisation des conduits concentriques, le conduit extérieur est un tube et le conduit intérieur a une section transversale de forme carrée.

Selon encore une autre variante de réalisation des conduits concentriques, les conduits concentriques ont tous les deux une section transversale de forme elliptique.

D'autres caractéristiques et avantages apparaîtront au cours de la description qui va suivre donnée à titre d'exemple illustratif et non limitatif, faite en référence aux dessins annexés et, sur lesquels:

- la figure 1 est une vue schématique longitudinale d'un dispositif de mesure ultrasonore selon un premier mode de réalisation de l'invention,
- la figure 2 est une vue schématique en coupe transversale suivant AA du dispositif de mesure ultrasonore représenté à la figure 1,
- la figure 3 est une vue schématique en coupe transversale suivant BB du dispositif de mesure ultrasonore représenté aux figures 1 et 2,
- la figure 4 est une vue schématique partielle en coupe longitudinale suivant CC du dispositif de mesure ultrasonore représenté à la figure 1,
- les figures 5 à 8 représentent plusieurs variantes de réalisation du conduit intérieur 28 du dispositif de mesure ultrasonore représenté à la figure 4,
- la figure 9 est une vue schématique en coupe longitudinale d'un deuxième mode de réalisation du dispositif de mesure ultrasonore représenté à la figure 4,
- les figures 10 à 12 représentent plusieurs variantes de réalisation du conduit intérieur 28 du dispositif de mesure ultrasonore représenté à la figure 9,
- la figure 13 est une vue schématique agrandie en coupe transversale suivant BB d'une première variante de réalisation des conduits concentriques du dispositif représenté aux figures 1 à 4,
- la figure 14 est une vue schématique agrandie en coupe transversale suivant BB d'une deuxième variante de réalisation des conduits concentriques du dispositif représenté aux figures 1 à 4,
- la figure 15 est une vue schématique agrandie en coupe transversale suivant BB d'une troisième variante de réalisation des conduits concentriques du dispositif représenté aux figures 1 à 4,
- la figure 16 est un graphique représentant plusieurs courbes de calibration obtenues pour différents gaz avec le dispositif de mesure ultrasonore représenté à la figure 10.

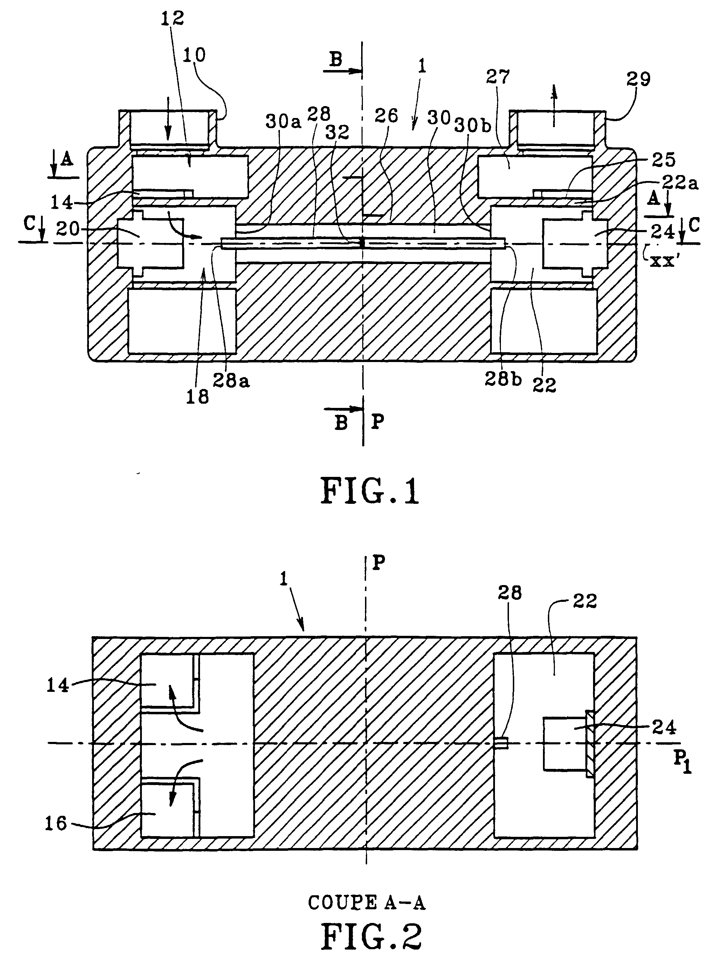

Un dispositif de mesure ultrasonore d'une quantité volumique de gaz telle que le débit est représenté aux figures 1 à 4.

Comme représenté sur la figure 1, le dispositif de mesure 1 selon un premier mode de réalisation de l'invention comprend une entrée de gaz 10 qui débouche dans une chambre 12 de grande section vis à vis de la section de ladite entrée de gaz.

Cette chambre 12 possède deux ouvertures latérales 14, 16 (fig. 2) qui débouchent dans une même chambre dite de mesure 18 située en dessous de la chambre 12 et dans laquelle est logé un transducteur ultrasonore 20. La chambre de mesure 18 correspond à une première zone du dispositif.

Le dispositif de mesure 1 comprend également une autre chambre de mesure 22 dans laquelle est logé un autre transducteur ultrasonore 24 et qui correspond à une seconde zone du dispositif, le gaz s'écoulant de la première zone vers la seconde zone. Les deux transducteurs 20, 24 sont ainsi disposés en vis-à-vis et alignés suivant une direction longitudinale d'axe XX' qui correspond à la direction longitudinale de l'écoulement du gaz entre lesdits transducteurs.

Les transducteurs sont en vis à vis et définissent entre eux un trajet de mesure ultrasonore dans le gaz qui sera décrit plus en détail ultérieurement. La chambre de mesure 22 comprend deux ouvertures latérales 23, 25 (dont une seule 25 est représentée sur la fig. 1) ménagées dans sa paroi supérieure 22a. Les deux ouvertures latérales 23, 25 débouchent dans une chambre 27 symétrique de la chambre 12 par rapport au plan P, ladite chambre 27 étant reliée à une sortie de gaz 29.

Ainsi, l'écoulement de gaz est introduit dans le dispositif de mesure 1 par l'entrée 10 suivant la flèche (fig. 1), subit une grande variation de pression dans la chambre 12 et voit sa vitesse fortement réduite puis se partage en deux fractions symétriques par rapport au plan P1 (fig.2) qui empruntent chacune une ouverture latérale 14, 16 et débouchent ensuite dans la chambre de mesure 18 de part et d'autre du transducteur 20 (fig. 1).

Là, les fractions d'écoulement se rejoignent pour ne former qu'un seul écoulement sur le trajet de mesure ultrasonore précité entre les deux transducteurs 20, 24.

L'écoulement du gaz débouche ensuite dans la chambre de mesure 22, s'échappe de celle-ci en se partageant à nouveau en deux fractions égales qui empruntent chacune une des ouvertures latérales 23, 25 et reforment un écoulement unitaire dans la chambre 27 avant de s'engager dans la sortie de gaz 29.

Chaque transducteur est alternativement émetteur et récepteur et est relié à un bloc électronique de mesure non représenté sur les figures.

Classiquement, le bloc électronique de mesure commande l'émission de signaux ultrasonores à partir de l'un des transducteurs 20, la réception de ces signaux par l'autre transducteur 24 et la mesure d'une grandeur physique caractéristique de la vitesse de propagation desdits signaux dans l'écoulement du gaz, par exemple le temps de propagation t1.

Inversement, le bloc électronique de mesure commande l'émission de signaux ultrasonores par le transducteur 24, la réception de ces signaux par le transducteur 20 et la mesure du temps de propagation correspondant t2. Connaissant les deux mesures t1 et t2, les dimensions de la section de passage S du gaz entre les deux transducteurs et leur écartement L, le bloc électronique de mesure en déduit le débit de gaz:

$$Q = \frac{LS}{2} \cdot \frac{t_2 - t_1}{t_2 - t_1}$$

Il est également possible de faire une mesure de temps de propagation puis une mesure du déphasage induit par la propagation du signal ultrasonore pour affiner la mesure de débit comme décrit dans le brevet européen N°0347096.

Le trajet de mesure ultrasonore entre les deux transducteurs va maintenant être décrit en détail.

Selon l'invention, le dispositif de mesure comporte sur au moins une partie du trajet de mesure ultrasonore deux conduits concentriques d'axe XX', l'un étant appelé conduit extérieur 26 et l'autre conduit intérieur 28.

Les deux conduits définissent entre eux, c'est à dire entre la surface intérieure du conduit extérieur 26 et la surface extérieure du conduit intérieur 28, un espace longitudinal 30 pour le passage du gaz de la première zone 18 vers la seconde zone 22.

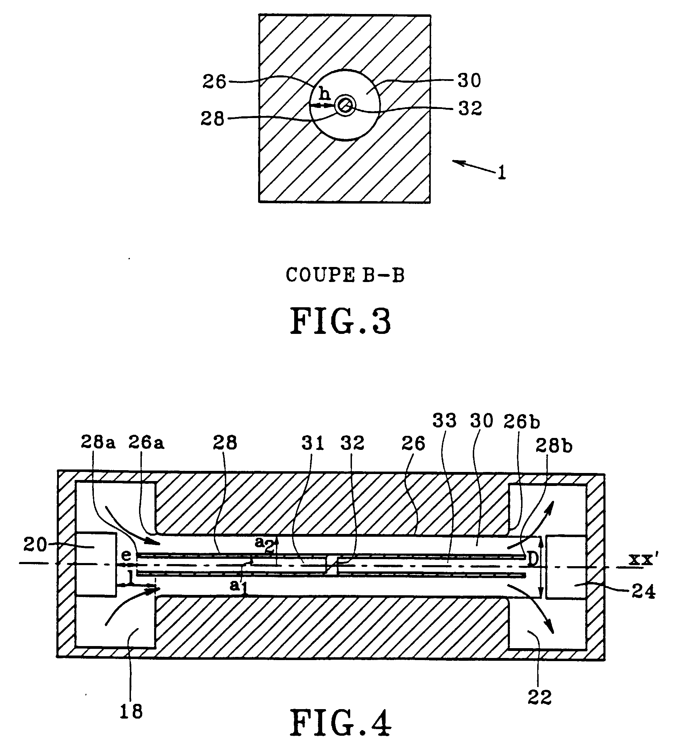

Le dispositif selon l'invention comprend des moyens destinés à ne permettre le passage du gaz de la première zone 18 vers la seconde zone 22 et la mesure ultrasonore que dans l'espace longitudinal 30. Avantageusement, ces moyens sont formés par un élément central qui obstrue le conduit intérieur 28 dans sa partie centrale et sépare l'intérieur de celui-ci en deux logements internes 31 et 33. Comme représenté sur les figures 1 et 4, cet élément central est une cloison 32 solidaire du conduit intérieur 28 et qui est formée lors de la réalisation des deux logements internes 31 et 33. Cette configuration permet à une partie des signaux ultrasonores émis par l'un des transducteurs 20, 24 et qui n'est pas transmise dans l'espace longitudinal 30 de se propager dans le logement interne situé en vis à vis de ce transducteur et ainsi d'éviter une réflexion parasite immédiate qui se produirait avec un obstacle placé entre les deux transducteurs ultrasonores.

Ainsi, cette partie des signaux ultrasonores se réfléchit sur l'élément central, repart en direction du transducteur émetteur et atteint celui-ci lorsque les signaux transmis dans l'espace longitudinal sont reçus par l'autre transducteur. Dans ce cas, on cesse d'émettre des signaux mais il est encore possible de recevoir des signaux ultrasonores pendant un temps correspondant au temps de propagation nécessaire aux ultrasons pour traverser l'espace longitudinal 30.

Dans le premier mode de réalisation de l'invention représenté sur les figures 1 et 4, le conduit extérieur 26 est formé à partir des parois du dispositif de mesure qui servent à définir les chambres de mesure 18, 22 et ainsi ledit conduit extérieur ne débouche pas dans lesdites chambres de mesure.

Le conduit intérieur 28 est fixé au conduit extérieur 26 au moyen d'un support situé dans la partie centrale des deux conduits. Ce support non représenté sur les figures est par exemple réalisé par deux nervures radiales diamétralement opposées, situées dans l'espace longitudinal 30 et de dimensions suffisantes pour maintenir de manière rigide le conduit intérieur 28 à l'intérieur du conduit extérieur 26, sans trop perturber l'écoulement de gaz et la propagation des ultrasons.

Les conduits concentriques 26, 28 sont par exemple des tubes de diamètre constant conférant à l'espace longitudinal une section de passage transversale constante de forme annulaire (fig.3). Il est également possible d'envisager que la section de passage transversale ne soit pas nécessairement constante sur toute la dimension longitudinale des conduits.

La configuration du dispositif de mesure ultrasonore 1 selon l'invention limite le nombre de modes propagatifs et réduit considérablement les déphasages parasites par rapport à une structure constituée d'une pluralité de tubes parallèles entre eux telle que définie dans la demande internationale WO94/09342. On obtient ainsi de bonnes mesures sur toute la gamme de débit. En outre, la Demanderesse a pu constater une amélioration des résultats en utilisant un conduit intérieur 28 plus long que le conduit extérieur 26 et disposé symétriquement par rapport audit conduit extérieur.

En effet, le gaz est mieux canalisé dans l'espace longitudinal 30 à l'extrémité d'entrée 30a dudit espace longitudinal et le phénomène de recirculation qui se produisait à l'extrémité de sortie 30b dudit espace longitudinal lorsque les deux conduits avaient la même longueur est désormais inexistant.

Pour un fluide donné, en choisissant convenablement l'écartement entre chaque transducteur 20, 24 et les conduits intérieur 28 et extérieur 26, il est possible de réduire la partie des signaux ultrasonores qui sera transmise dans le logement interne en vis-à-vis du transducteur qui émet. Ainsi, si l'on désigne par e (fig. 4) la distance entre le transducteur 20 (resp. 24) et l'extrémité 28a (resp. 28b) du conduit intérieur 28 en regard dudit transducteur, par l la distance entre le transducteur 20 (resp. 24) et l'extrémité 26a (resp. 26b) du conduit extérieur 26 en regard dudit transducteur et par D le diamètre intérieur dudit conduit extérieur 26, les distances e et l doivent vérifier les relations suivantes:

$$0{,}1l \leq e \leq 0{,}9l$$

$$0{,}3D \leq 1 \leq 3D$$

pour d'une part, transmettre dans l'espace longitudinal 30 une quantité d'énergie ultrasonore suffisante et, d'autre part, éviter de produire un phénomène de recirculation de gaz introduisant un déphasage parasite dans les mesures ultrasonores.

Pour des transducteurs ultrasonores du type axisymétrique, la distance e est par exemple égale à l/2 et la distance l est par exemple égale à 0,9D. Pour certaines applications, selon la précision de mesure souhaitée, on peut prévoir que la plus grande dimension radiale h (fig. 3) de la section de passage transversale de l'espace longitudinal 30 confère à ladite section une fréquence de coupure $f_{02}$ caractéristique du mode de propagation (0,2) qui est supérieure à la fréquence des signaux ultrasonores émis par les transducteurs.

Ainsi, la fréquence de coupure pour du mode (m,n) un espace annulaire s'écrit

$$f_{mn} = \frac{c}{2\Pi} \sqrt{\frac{m^2}{a^2} + \frac{n^2 \Pi^2}{h^2}}$$

où c est la célérité du son dans le gaz considéré, $a = \sqrt{(a^2 + a^2)}/2$ a1 étant le rayon extérieur du tube intérieur, $a_2$ étant le rayon intérieur du tube extérieur, $h = a_2 - a_1$, n représente l'indice des modes axisymétriques, m représente l'indice des modes asymétriques.

Dans l'air, seuls les modes axisymétriques (0,0), (0,1) seront propagatifs dans l'espace longitudinal ainsi défini.

Les fréquences de coupure respectives de ces modes sont les suivantes :

$$f_{00} = 0$$

$$f_{01} = \frac{c}{2h}$$

$$f_{02} = \frac{c}{h}$$

A titre d'exemple, en choisissant les valeurs numériques suivantes pour un gaz tel que l'air,

$$a_1 = 3{,}5 \text{ mm}$$

$$a_2 = 8 \text{ mm}$$

$$c = 340 \text{m/s}$$

on obtient les fréquences de coupure correspondant aux modes (0,1) et (0,2)

$$f_{01} = 37{,}78 \text{ kHz}$$

$$f_{02} = 75{,}55 \text{ kHz}$$

Dans l'exemple choisi, la fréquence des signaux ultrasonores émis par les transducteurs est de 40 KHz et donc est bien inférieure à la fréquence caractéristique du mode propagatif (0,2) et seuls les modes (0,0), et (0,1) seront propagatifs.

Pour d'autres applications où les pertes de charge autorisées sont plus élevées, il peut être avantageux de ne laisser se propager que le mode plan dans l'espace longitudinal 32 et ainsi l'on choisit la plus grande dimension radiale h de la section de passage transversale dudit espace longitudinal pour qu'elle confère à ladite section une fréquence de coupure caractéristique du mode de propagation (0,1) qui soit supérieure à la fréquence des signaux ultrasonores émis par les transducteurs.

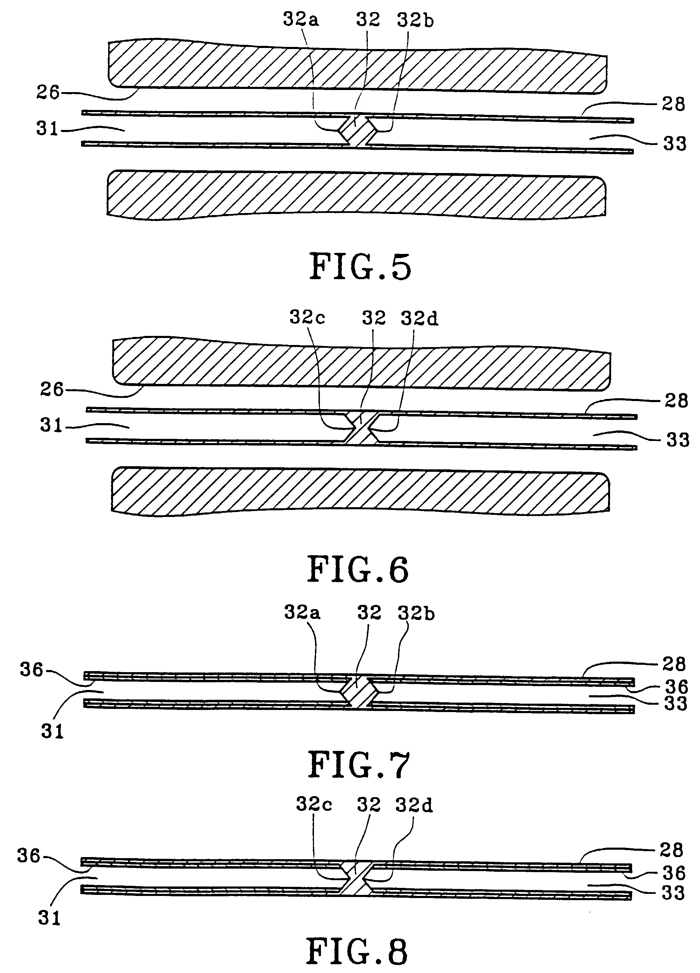

Conformément au premier mode de réalisation de l'invention décrit en référence aux figures 1 à 4, plusieurs variantes de réalisation du conduit intérieur 28 sont représentées aux figures 5 à 8.

La figure 5 représente une cloison 32 obstruant le conduit intérieur 28 et présentant en regard de chaque logement interne 31, 33 respectivement une surface convexe 32a, 32b par exemple de forme conique. Les signaux ultrasonores émis par le transducteur ultrasonore émetteur 20 ou 24 et qui se propagent dans le logement interne 31 ou 33 situé en vis à vis dudit transducteur émetteur se réfléchissent sur la surface convexe correspondante 32c ou 32d en direction des parois internes dudit logement interne ce qui augmente leur temps de parcours dans le logement interne et donc retarde l'instant où ils atteignent le transducteur émetteur.

Ainsi, la phase d'émission des signaux ultrasonores peut être prolongée sans risque de perturber les mesures ultrasonores de même que la phase de réception de ces signaux par l'autre transducteur.

La figure 6 représente une cloison 32 présentant en regard de chaque logement interne 31, 33 respectivement une surface concave 32c, 32d, par exemple de forme conique. De manière analogue à ce qui vient d'être décrit en référence à la figure 5, les signaux ultrasonores qui se propagent dans les logements internes 31, 33 alternativement en fonction du transducteur qui émet, vont subir des réflexions multiples sur les parois internes du logement interne correspondant 31 ou 33 qui retardent l'instant où lesdits signaux atteindront le transducteur émetteur.

Les figures 7 et 8 sur lesquelles seul le conduit intérieur 28 a été représenté décrivent une cloison 32 obstruant le conduit intérieur, présentant en regard de chaque logement interne 31 (resp. 33) une surface convexe 32a (resp. 32b) à la figure 7 et une surface concave 32c (resp. 32d) à la figure 8.

Chacun des logements internes 31, 33 est muni sur toute sa dimension longitudinale ou longueur d'un revêtement 36 réalisé dans un matériau absorbant les ultrasons, permettant ainsi d'atténuer voire de faire disparaître les signaux ultrasonores présents dans les logements internes et réfléchis par les surfaces convexes 32a, 32b ou concaves 32c, 32d.

De cette manière, les transducteurs ultrasonores peuvent continuer à émettre des signaux ultrasonores sans être gênés par les signaux parasites qui se propagent dans le logement interne situé en vis à vis et qui vont se réfléchir sur la cloison 32.

On peut également envisager de munir chaque logement interne 31, 33, dans l'exemple de réalisation représenté aux figures 1 à 4, d'un revêtement 36 réalisé dans un matériau absorbant les ultrasons afin d'atténuer la propagation des signaux ultrasonores dans les logements internes.

L'élément 32 peut aussi comporter une surface plane réfléchissante de sorte que les ondes ultrasonores émises par un transducteur 20 ou 24 seront réfléchies sur cette paroi et pourront être détecté en retour par ce transducteur. On peut ainsi mesurer indépendamment la vitesse de l'onde ultrasonore dans le fluide au repos (puisque le fluide ne circule pas à l'intérieur du tube 28). Cette mesure permet de tenir compte des variations de propriétés du fluide, telles que sa densité. Pour une telle mesure, on remarque que l'on a intérêt à augmenter le trajet de l'onde à l'intérieur du tube de façon à augmenter la précision de la mesure. Pour ce faire, on place alors l'élément 32 le plus loin possible du transducteur émetteur et récepteur de l'onde, par exemple à l'extrémité du tube 28 opposée à ce transducteur. L'autre face (non réfléchissante) de l'élément 32 est alors apte à diffuser ou absorber les ondes ultrasonores ou à les réfléchir comme dans l'exemple de réalisation montré sur la figure 7.

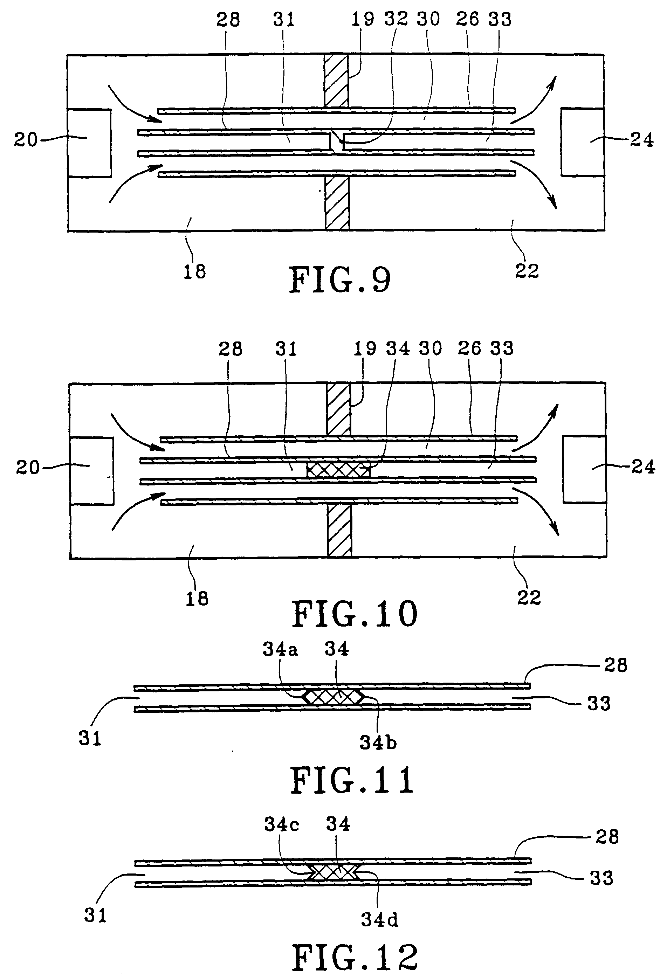

La figure 9 est une vue schématique analogue à celle de la figure 4 représentant un deuxième mode de réalisation du dispositif de mesure selon l'invention.

Sur la figure 9 sont représentés deux transducteurs ultrasonores 20, 24 alignés suivant la direction longitudinale XX' et logés respectivement dans deux chambres de mesure 18, 22, une paroi 19 séparant lesdites chambres de mesure.

Deux tubes concentriques d'axe XX' traversent la paroi 19 et relient chacune des chambres de mesure 18, 22 de manière symétrique par rapport à ladite paroi.

La configuration de l'espace longitudinal 30, des conduits intérieur 28 et extérieur 26 et de l'élément central 32 est identique à celle décrite en référence aux figures 1 à 4.

Selon une variante du mode de réalisation de l'invention représenté à la figure 9, l'élément central est un élément de remplissage 34 réalisé dans un matériau absorbant les ultrasons ainsi que représenté sur la figure 10. Ainsi, les signaux ultrasonores qui se propagent dans les logements internes sont atténués voire supprimés dès lors qu'ils atteignent l'élément de remplissage 34 et ainsi, les risques de perturbation des mesures ultrasonores dans l'espace longitudinal 30 sont considérablement réduits.

Selon une autre variante représentée à la figure 11, l'élément de remplissage 34 réalisé dans un matériau absorbant les ultrasons peut également présenter en regard de chaque logement interne 31, 33 une surface convexe par exemple conique 34a, 34b ou une surface concave par exemple conique 34c, 34d ainsi que représenté à la figure 12 (sur ces deux figures, seul le conduit intérieur 28 a été représenté).

De cette manière, on peut atténuer la propagation des signaux ultrasonores dans les logements internes 31, 33 en raison de leur absorption par le matériau constitutif de l'élément de remplissage 34 et de leurs réflexions multiples sur les parois internes des logements 31, 33 occasionnées par la forme convexe ou concave des surfaces dudit élément de remplissage 34.

On peut également revêtir chaque logement interne 31, 33 d'un matériau absorbant les ultrasons pour piéger complètement les signaux ultrasonores qui se propagent dans les logements internes.

Il convient de noter que la cloison 32 représentée sur les figures 1, 3 et 4 peut être remplacée par l'élément de remplissage 34 décrit en référence aux figures 10 à 12.

Pour que le dispositif selon l'invention soit efficace et limite le nombre de modes propagatifs dans l'espace longitudinal 30, il faut que la surface intérieure du conduit extérieur 26 ne présente pas de parties en vis-à-vis qui soient parallèles entre elles.

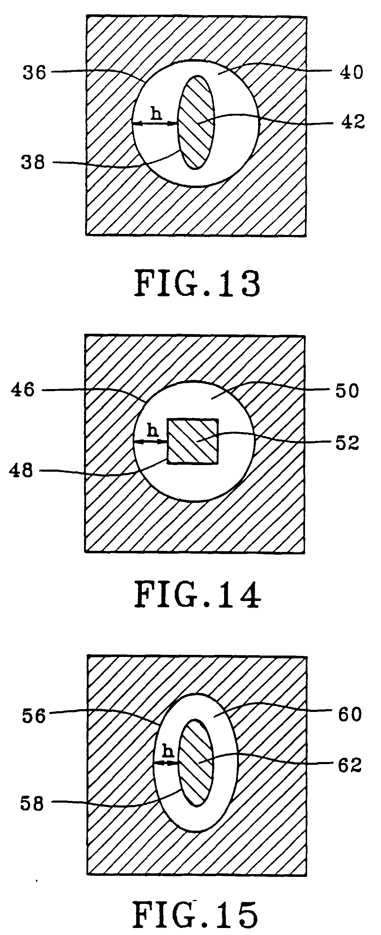

La figure 13 représente une vue schématique transversale agrandie en coupe suivant BB d'une variante du premier mode de réalisation de l'invention. Sur cette figure, le conduit extérieur 36 a une forme de tube et le conduit intérieur 38 a une section transversale de forme elliptique. La section transversale de l'espace longitudinal 40 a une plus grande dimension radiale notée h qu'il convient de dimensionner de manière à filtrer certains modes propagatifs.

Comme décrit ci-dessus pour les deux tubes concentriques, on peut choisir cette dimension pour ne laisser apparaître que le mode plan.

Le conduit intérieur 38 est obstrué dans sa partie centrale par une cloison 42 afin de ne permettre le passage du gaz et les mesures ultrasonores que dans l'espace longitudinal 40.

La figure 14 représente une vue schématique transversale agrandie suivant BB d'une autre variante du premier mode de réalisation de l'invention.

Sur cette figure, le conduit extérieur 46 a encore la forme d'un tube tandis que le conduit intérieur 48 a une section transversale de forme carrée. La section transversale de l'espace longitudinal 50 a une plus grande dimension radiale notée h.

Le conduit intérieur 48 est obstrué dans sa partie centrale par une cloison 52.

La figure 15 représente une vue schématique transversale agrandie suivant BB d'une autre variante du premier mode de réalisation de l'invention.

Sur cette figure, les deux conduits extérieur 56 et intérieur 58 ont une section transversale de forme elliptique conférant ainsi à l'espace longitudinal 60 une forme de couronne elliptique.

La section transversale de l'espace longitudinal 62 a une plus grande dimension radiale notée h.

Le conduit intérieur 58 est obstrué dans sa partie centrale par une cloison 62.

D'autres configurations du dispositif de mesure selon l'invention peuvent également être envisagées avec une disposition différente des transducteurs ultrasonores (non nécessairement suivant l'axe longitudinal XX' des conduits) en utilisant d'autres formes de conduits et avec un espace longitudinal de section transversale pouvant varier.

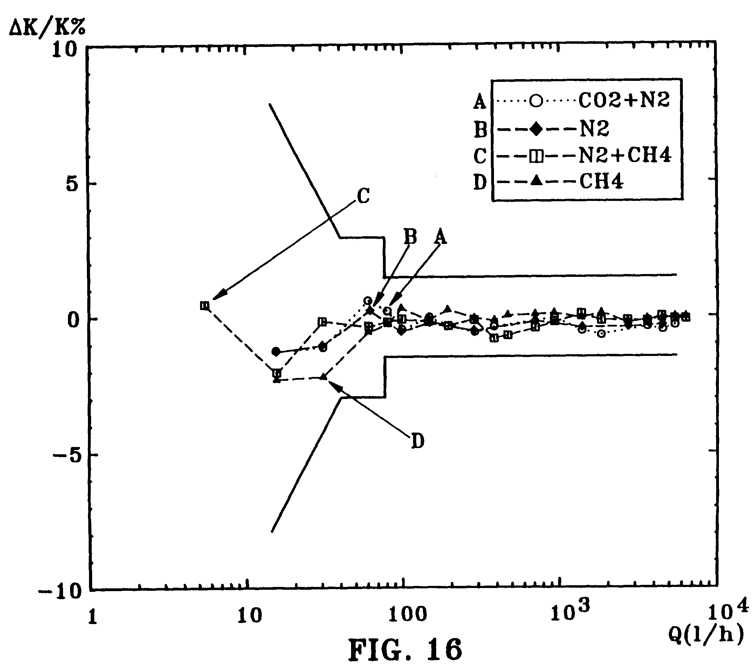

La figure 16 représente différentes courbes de calibration obtenues pour différents gaz (dioxyde de carbone et azote: courbe A, azote: courbe B, azote et méthane: courbe C, méthane: courbe D) avec le dispositif de mesure ultrasonore selon l'invention représentée à la figure 10 et pour lequel la plus grande dimension radiale de la section de passage de l'espace longitudinal 30 confère à ladite section de passage une fréquence de coupure fc caractéristique du mode de propagation (0,2) qui est supérieure à la fréquence des signaux ultrasonores émis par les transducteurs. Les transducteurs ultrasonores 20, 24 sont de type axisymétrique, émettant à une fréquence ultrasonore de 40 kHz et sont situés à une distance des extrémités correspondantes 28a, 28b du conduit intérieur 28 égale à 0,5l et l = 0,9D. La longeur du conduit extérieur 26 est de 100mm.

Les rayons a1 et a2 précédemment définis valent respectivement 3,5 mm et 8 mm. Ce graphique qui représente les variations relatives du facteur K (K est égal au produit du nombre de Reynolds par le diamètre divisé par la viscosité cinématique) en fonction du débit de gaz traduit le fait que le dispositif de l'invention, d'une part, améliore la linéarité des courbes de calibration et, d'autre part, ne dépend pratiquement pas des propriétés du gaz utilisé.

## Revendications

1. Dispositif de mesure ultrasonore d'une quantité volumique d'un fluide (1) s'écoulant d'une première zone (18) vers une seconde zone (22) dudit dispositif, comprenant au moins deux transducteurs ultrasonores (20,24) aptes à émettre et à recevoir des signaux ultrasonores, disposés chacun dans l'une desdites zones du dispositif et définissant entre eux un trajet de mesure ultrasonore dans le fluide, ainsi que des moyens pour déterminer la quantité volumique dudit fluide à partir de mesures d'au moins une grandeur physique caractéristique de la vitesse de propagation des signaux ultrasonores dans le fluide, caractérisé en ce que ledit dispositif de mesure ultrasonore (1) comporte, d'une part, sur au moins une partie du trajet de mesure ultrasonore deux conduits concentriques (26, 28) d'axe longitudinal (XX'), l'un extérieur (26) et l'autre intérieur (28) définissant entre leurs surfaces respectives intérieure et extérieure un espace longitudinal (30) et, d'autre part, des moyens (32, 34) permettant la mesure ultrasonore uniquement dans l'espace longitudinal (30).

2. Dispositif selon la revendication 1, caractérisé en ce que le conduit intérieur (28) est obstrué par un élément central (32, 34) séparant l'intérieur dudit conduit intérieur en deux logements internes (31, 33).

3. Dispositif selon la revendication 2, caractérisé en ce que l'élément central (32, 34) présente en regard de chaque logement interne (31, 33) une surface concave (32c, 32d, 34c, 34d).

4. Dispositif selon la revendication 2, caractérisé en ce que l'élément central (32, 34) présente en regard de chaque logement interne (31, 33) une surface convexe (32a, 32b, 34a, 34b).

5. Dispositif selon l'une des revendications 2 à 4, caractérisé en ce que l'élément central est une cloison (32) solidaire du conduit intérieur (28).

6. Dispositif selon l'une des revendications 2 à 4, caractérisé en ce que l'élément central est un élément de remplissage (34) réalisé dans un matériau absorbant les ultrasons.

7. Dispositif selon l'une des revendications 2 à 6, caractérisé en ce que chaque logement interne (31, 33) est muni sur au moins une partie de sa dimension longitudinale d'un revêtement (36) réalisé dans un matériau absorbant les ultrasons.

8. Dispositif selon l'une des revendications 1 à 7, caractérisé en ce que l'espace longitudinal (30) possède une section de passage transversale constante sur toute la dimension longitudinale dudit espace longitudinal.

9. Dispositif selon l'une des revendications 1 à 8, caractérisé en ce que le conduit intérieur (28) présente une dimension longitudinale supérieure à celle du conduit extérieur (26) et est disposé de manière symétrique par rapport audit conduit extérieur (26).

10. Dispositif selon l'une des revendications 1 à 9, caractérisé en ce que les deux transducteurs (20, 24) sont alignés suivant la direction longitudinale de l'axe (XX').

11. Dispositif selon les revendications 9 et 10, caractérisé en ce que les conduits extérieur (26) et intérieur (28) possèdent respectivement deux extrémités longitudinales (26a, 26b) et (28a, 28b) faisant face aux transducteurs (20, 24) et étant respectivement situées à une distance l et e desdits transducteurs, e étant comprise entre 0,1l et 0,9l et l étant comprise entre 0,3D et 3D, D étant le diamètre intérieur du conduit extérieur (26).

12. Dispositif selon l'une des revendications 1 à 11, caractérisé en ce que l'espace longitudinal (30) possède une section de passage transversale dont la plus grande dimension radiale confère à ladite section de passage une fréquence de coupure caractéristique du mode de propagation (0,2) qui est supérieure à la fréquence des signaux ultrasonores émis par les transducteurs (20, 24).

13. Dispositif selon l'une des revendications 1 à 11, caractérisé en ce que l'espace longitudinal (30) possède une section de passage transversale dont la plus grande dimension radiale confère à ladite section de passage une fréquence de coupure caractéristique du mode de propagation (0,1) qui est supérieure à la fréquence des signaux ultrasonores émis par les transducteurs (20, 24).

14. Dispositif selon l'une des revendications 1 à 13, caractérisé en ce que les conduits concentriques sont des tubes (26, 28) conférant ainsi à l'espace longitudinal (30) une section de passage transversale de forme annulaire.

15. Dispositif selon l'une des revendications 1 à 13, caractérisé en ce que le conduit extérieur est un tube (36) et le conduit intérieur (38) a une section transversale de forme elliptique.

16. Dispositif selon l'une des revendications 1 à 13, caractérisé en ce que le conduit extérieur est un tube (46) et le conduit intérieur (48) a une section transversale de forme carrée.

17. Dispositif selon l'une des revendications 1 à 13, caractérisé en ce que les conduits concentriques (56, 58) ont tous les deux une section transversale de forme elliptique.

18. Dispositif selon la revendication 2, caractérisé en ce que ledit élément central (32, 34) comporte une face réfléchissante permettant la mesure de la vitesse des ondes ultrasonores dans le fluide au repos.

19. Dispositif selon l'une des revendications 2 à 17, caractérisé en ce que ledit élément central (32, 34) est placé dans la partie centrale du conduit intérieur (28).

20. Dispositif selon la revendication 18, caractérisé en ce que ledit élément central (32, 34) est placé dans le conduit intérieur (28) à son extrémité opposée au transducteur émettant les ondes ultrasonores réfléchies par ledit élément central.

**Patentansprüche**

1. Vorrichtung (1) zur Ultraschallmessung einer volumenbezogenen Menge eines Fluids, das von einer ersten Zone (18) der Vorrichtung zu einer zweiten Zone (22) der Vorrichtung strömt, mit wenigstens zwei Ultraschallwandlern (20, 24), die Ultraschallsignale senden und empfangen können und jeweils in einer der Zonen der Vorrichtung angeordnet sind, wobei sie eine zwischen ihnen in dem Fluid liegende Ultraschallmeßstrecke definieren, und Mitteln, die die volumenbezogene Menge des Fluids ausgehend von Messungen wenigstens einer die Ausbreitungsgeschwindigkeit der Ultraschallsignale in dem Fluid charakterisierenden physikalischen Größe bestimmen, dadurch gekennzeichnet, daß die Vorrichtung (1) zur Ultraschallmessung zum einen in wenigstens einem Teil der Ultraschallmeßstrecke zwei zu einer Längsachse (XX') konzentrisch angeordnete Leitungen (26, 28) umfaßt, wobei die eine (26) außen liegt und die andere (28) innen liegt und sie zwischen ihrer inneren bzw. äußeren Oberfläche einen sich in Längsrichtung erstreckenden Raum (30) definieren, und zum anderen Mittel (32, 34) umfaßt, die die Ultraschallmessung allein in dem sich in Längsrichtung erstreckenden Raum (30) ermöglichen.

2. Vorrichtung nach Anspruch 1, dadurch gekennzeichnet, daß die innere Leitung (28) durch ein zentrales Element (32, 34) blockiert wird, das das Innere der Leitung in zwei innere Kammern (31, 33) teilt.

3. Vorrichtung nach Anspruch 2, dadurch gekennzeichnet, daß das zentrale Element (32, 34) in Richtung auf jede innere Kammer (31, 33) eine konkave Oberfläche (32c, 32d, 34c, 34d) aufweist.

4. Vorrichtung nach Anspruch 2, dadurch gekennzeichnet, daß das zentrale Element (32, 34) in Richtung auf jede innere Kammer (31, 33) eine konvexe Oberfläche (32a, 32b, 34a, 34b) aufweist.

5. Vorrichtung nach einem der Ansprüche 2 bis 4, dadurch gekennzeichnet, daß das zentrale Element eine Trennwand (32) ist, wobei die Trennwand und die innere Leitung (28) aus einem Stück gebildet sind.

6. Vorrichtung nach einem der Ansprüche 2 bis 4, dadurch gekennzeichnet, daß das zentrale Element ein Füllelement (34) ist, das aus einem Ultraschall absorbierenden Material hergestellt ist.

7. Vorrichtung nach einem der Ansprüche 2 bis 6, dadurch gekennzeichnet, daß jede innere Kammer (31, 33) auf wenigstens einem Teil ihrer Länge mit einer Auskleidung (36) ausgestattet ist, die aus einem Ultraschall absorbierenden Material hergestellt ist.

8. Vorrichtung nach einem der Ansprüche 1 bis 7, dadurch gekennzeichnet, daß der sich in Längsrichtung erstreckende Raum (30) über die gesamte Länge des sich in Längsrichtung erstreckenden Raums einen konstanten Durchflußquerschnitt besitzt.

9. Vorrichtung nach einem der Ansprüche 1 bis 8, dadurch gekennzeichnet, daß die innere Leitung (28) eine Länge aufweist, die größer ist als diejenige der äußeren Leitung (26) und daß sie symmetrisch zur äußeren Leitung (26) angeordnet ist.

10. Vorrichtung nach einem der Ansprüche 1 bis 9, dadurch gekennzeichnet, daß die zwei Wandler (20, 24) nach der Längsrichtung der Achse (XX') ausgerichtet sind.

11. Vorrichtung nach den Ansprüchen 9 und 10, dadurch gekennzeichnet, daß die äußere Leitung (26) und die innere Leitung (28) jeweils zwei Enden (26a, 26b bzw. 28a, 28b) in Längsrichtung aufweisen, die den Wandlern (20, 24) gegenüberliegen und jeweils in einem Abstand 1 bzw. e zu den Wandlern angeordnet sind, wobei e zwischen 0,1.1 und 0,9.1 und 1 zwischen 0,3.D und 3.D liegt und D der Innendurchmesser der äußeren Leitung (26) ist.

12. Vorrichtung nach einem der Ansprüche 1 bis 11, dadurch gekennzeichnet, daß der sich in Längsrichtung erstreckende Raum (30) einen Durchflußquerschnitt besitzt, dessen größte Abmessung in radialer Richtung dem Durchflußquerschnitt eine den Ausbreitungsmodus (0,2) kennzeichnende Grenzfrequenz verleiht, die größer als die Frequenz der von den Wandlern (20, 24) ausgesendeten Ultraschallsignale ist.

13. Vorrichtung nach einem der Ansprüche 1 bis 11, dadurch gekennzeichnet, daß der sich in Längsrichtung erstreckende (30) einen Durchflußquerschnitt besitzt, dessen größte Abmessung in radialer Richtung dem Durchflußquerschnitt eine den Ausbreitungsmodus (0,1) kennzeichnende Grenzfrequenz verleiht, die größer als die Frequenz der von den Wandlern (20, 24) ausgesendeten Ultraschallsignale ist.

14. Vorrichtung nach einem der Ansprüche 1 bis 13, dadurch gekennzeichnet, daß die konzentrischen Leitungen Rohre (26, 28) sind, die dem sich in Längsrichtung erstreckenden Raum (30) einen ringförmigen Durchflußquerschnitt verleihen.

15. Vorrichtung nach einem der Ansprüche 1 bis 13, dadurch gekennzeichnet, daß die äußere Leitung ein Rohr (36) ist und die innere Leitung (38) einen elliptischen Querschnitt aufweist.

16. Vorrichtung nach einem der Ansprüche 1 bis 13, dadurch gekennzeichnet, daß die äußere Leitung ein Rohr (46) ist und die innere Leitung (48) einen quadratischen Querschnitt aufweist.

17. Vorrichtung nach einem der Ansprüche 1 bis 13, dadurch gekennzeichnet, daß die konzentrischen Leitungen (56, 58) beide einen elliptischen Querschnitt aufweisen.

18. Vorrichtung nach Anspruch 2, dadurch gekennzeichnet, daß das zentrale Element (32, 34) eine reflektierende Seite umfaßt, die die Messung der Geschwindigkeit der Ultraschallwellen in dem sich in Ruhe befindenden Fluid ermöglicht.

19. Vorrichtung nach einem der Ansprüche 2 bis 17, dadurch gekennzeichnet, daß das zentrale Element (32, 34) in dem in der Mitte gelegenen Teil der inneren Leitung (28) angeordnet ist.

20. Vorrichtung nach Anspruch 18, dadurch gekennzeichnet, daß das zentrale Element (32, 34) in der inneren Leitung (28) an ihrem äußeren Ende angeordnet ist, das dem Wandler gegenüberliegt, der die durch das zentrale Element reflektierten Ultraschallwellen aussendet.

**Claims**

1. An ultrasound measurement device for measuring a volume-related quantity of a fluid (I) flowing from a first zone (18) to a second zone (22) of said device, the device including at least two ultrasound transducers (20, 24) suitable for emitting and for receiving ultrasound signals, each being disposed in one of said zones of the device and defining between them an ultrasound measurement path in the fluid, the device also having means for determining the volume-related quantity of said fluid from measurements of at least one physical magnitude characteristic of the propagation speed of the ultrasound signals in the fluid, the ultrasound measurement device (1) being, characterized in that it further includes firstly, on at least a portion of the ultrasound measurement path, two concentric ducts (26, 28) about a longitudinal axis (XX'), comprising an outer duct (26) and an inner duct (28) defining a longitudinal space (30) between their respective inner and outer surfaces, and secondly, means (32, 34) enabling ultrasound measurement to be performed solely in the longitudinal space (30).

2. A device according to claim 1, characterized in that the inner duct (28) is obstructed by a central element (32, 34) subdividing the inside of said inner duct into two internal housings (31, 33).

3. A device according to claim 2, characterized in that the central element (32, 34) has a concave surface (32c, 32d, 34c, 34d) facing each of the internal housings (31, 33).

4. A device according to claim 2, characterized in that the central element (32, 34) has a convex surface (32a, 32b, 34a, 34b) facing each of the internal housings (31, 33).

5. A device according to any one of claims 2 to 4, characterized in that the central element is a partition (32) secured to the inner duct (28).

6. A device according to any one of claims 2 to 4, characterized in that the central element is a filler element (34) made out of an ultrasound-absorbent material.

7. A device according to any one of claims 2 to 6, characterized in that each internal housing (31, 33) is provided over at least a portion of its longitudinal dimension with a lining (36) made of an ultrasound-absorbent material.

8. A device according to any one of claims I to 7, characterized in that the longitudinal space (30) has a flow cross-section that is constant over the entire longitudinal dimension of said longitudinal space.

9. A device according to any one of claims 1 to 8, characterized in that the inner duct (28) has a longitudinal dimension that is greater than the longitudinal dimension of the outer duct (26) and is disposed symmetrically relative to said outer duct (26).

10. A device according to any one of claims 1 to 9, characterized in that the two transducers (20, 24) are in alignment on the longitudinal direction on the axis (XX').

11. A device according to claims 9 and 10, characterized in that each of the outer and inner ducts (26, 28) possesses two respective longitudinal ends (26a 26b) and (28a, 28b) facing the transducers (20, 24) and respectively situated at distances I and e from said transducers, where $e$ lies in the range 0.1I and 0.9I, and I lies in the range 0.3D and 3D, where D is the inside diameter of the outer duct (26).

12. A device according to any one of claims 1 to 11, characterized in that the longitudinal space (30) has a flow cross-section whose largest radial dimension imparts a cutoff frequency charactcristic of (0,2) propagation mode to said flow cross-section that is greater than the frequency of the ultrasound signals emitted by the transducers (20, 24).

13. A device according to any one of claims 1 to 11, characterized in that the longitudinal space (30) has a flow cross-section whose largest radial dimension imparts a cutoff frequency characteristic of (0,1) propagation mode to said flow cross-section that is greater than the frequency of the ultrasound signals emitted by the transducers (20, 24).

14. A device according to any one of claims 1 to 13, characterized in that the concentric ducts are tubes (26, 28), thus conferring a flow cross-section to the longitudinal space (30) which is annular in shape.

15. A device according to any one of claims 1 to 13, characterized in that the outer duct is a tube (36) and the inner duct (38) has a cross-section that is elliptical in shape.

**16.** A device according to any one of claims 1 to 13, characterized in that the outer duct is a tube (46) and the inner duct (48) has a cross-section that is square in shape.

**17.** A device according to any one of claims 1 to 13, characterized in that both concentric ducts (56, 58) have a transverse cross-section that is elliptical in shape.

**18.** A device according to claim 2, characterized in that said central element (32, 34) includcs a reflecting face enabling the speed of ultrasound waves in the fluid at rest to be measured.

**19.** A device according to any one of claims 2 to 17, characterized in that the central element (32, 34) is placed in the central portion of the inner duct (28).

**20.** A device according to claim 18, characterized in that said central element (32, 34) is placed in the inner duct (28) at its end furthest from the transducer that emits the ultrasound waves that are reflected by said central element.

FIG.1

COUPE A–A

FIG.2

COUPE B–B

# FIG.3

# FIG.4

FIG.5

FIG.6

FIG.7

FIG.8

FIG.9

FIG.10

FIG.11

FIG.12

FIG.13

FIG.14

FIG.15

FIG. 16

ΔK/K%

A ······O······ CO2+N2
B ——◆—— N2
C ——▯—— N2+CH4
D ——▲—— CH4

Q(l/h)

EP 0 777 852 B1